# EUROPÄISCHE PATENTANMELDUNG

(11) **EP 0 638 519 A1**
(43) Veröffentlichungstag der Anmeldung: **15.02.1995**
(21) Anmeldenummer: 94109876.6
(22) Anmeldetag: 27.06.1994
(51) Int. Cl.: C01F 7/02, C04B 35/113

(54) **Verfahren zur Herstellung eines Pulvergemisches aus Oxid-Keramik, insbesondere aus beta/beta"-Aluminiumoxid, sowie Vorrichtung zum Kalzinieren der Ausgangsmaterialien**

(30) Priorität: 02.07.1993 DE 4322001
(71) Anmelder: SILENT POWER GMBH FÜR ENERGIESPEICHERTECHNIK, D-45128 Essen 1 (DE)
(72) Erfinder: Hrovat, Milan, D-63517 Rodenbach (DE); Porth, Heinrich, D-63456 Hanau (DE)
(74) Vertreter: Stoffregen, Hans-Herbert, Dr. Dipl.-Phys.

(57) **Zusammenfassung**

Die Erfindung bezieht sich auf ein Verfahren und eine Vorrichtung zur Herstellung eines Pulvergemisches aus Oxidkeramik, welches zur Herstellung von insbesondere topfförmigen Körpern zu verwenden ist. Hierzu werden Ausgangsmaterialien aufgemahlen und verdichtet, die verdichteten Materialien aufgebrochen und anschließend in einem Drehrohrofen (10) kalziniert.

## Beschreibung

Die Erfindung bezieht sich auf ein Verfahren zur Herstellung eines Pulvergemischs aus Oxidkeramik, welches zur Herstellung von insbesondere topfförmigen Körpern zu verwenden ist. Inbesondere bezieht sich die Erfindung auf ein Verfahren zur Herstellung von β- bzw. β''-Aluminiumoxid-Pulvergemisch, insbesondere bestimmt zur Herstellung eines einseitig offenen hohlzylindrischen Körpers als Feststoffelektrolyten für z. B. eine Natrium-Schwefel-Batterie. Schließlich bezieht sich die Erfindung auf eine Vorrichtung zum Kalzinieren von Oxidkeramik bildenden Ausgangsmaterialien, insbesondere von zu β/β''-Aluminiumoxid zu konvertierenden Ausgangsmaterialien umfassend zumindest Al₂O₃ und Na₂CO₃.

Der Bedarf an leistungsfähigen elektrochemischen Energiespeichern nimmt insbesondere vor dem Hintergrund zu, daß zur Bewältigung von Umweltproblemen die Benutzung von elektrischen Straßenfahrzeugen erforderlich wird. Bei den elektrochemischen Elementen haben sich in der Vergangenheit Blei/Säure-Batterien und in geringem Umfang Nickel/Cadmium-Batterien durchgesetzt. Erstere zeigen einen hohen Entwicklungsstand, gleichwenn eine Verwendung in wichtigen Bereichen aufgrund ihres hohen Gewichtes und des großen Wartungsbedarfs nicht möglich ist. Daher ist der Einsatz in elektrischen Straßenfahrzeugen nicht praktikabel.

Die vorbekannten Nachteile können mit einer Natrium-Schwefel-Batterie ausgeräumt werden, die sich grundlegend von den konventionellen Akkumulatoren unterscheidet. So besitzt die Natrium-Schwefel-Batterie (Na/S-Batterie) flüssige Reaktanten und einen festen Elektrolyten.

Für die Funktion der Zelle sind geschmolzenes Natrium als die eine und geschmolzener Schwefel als die andere Reaktionssubstanz sowie ein die beiden Reaktionspartner trennender Festelektrolyt erforderlich. Dieser Festelektrolyt keramischen Werkstoffs hat die Eigenschaft, Natriumionen zu leiten, Elektronen jedoch nicht. Der Elektrolyt hat grundsätzlich die Form eines einseitig geschlossenen Zylinders oder Tiegels, in dessen Innerem sich das Natrium und außen der Schwefel befindet. Da letzterer auch im geschmolzenen Zustand ein Nichtleiter ist, muß der Schwefel in einen elektrisch leitenden Kohlefilz eingebracht werden. Dieser bildet die Fortsetzung des als positiver Stromanschluß dienenden Metallgehäuses der Zelle und sorgt mit seiner großen Oberfläche dafür, daß die elektrochemischen Prozesse genügend schnell ablaufen. Als negativer Stromanschluß dient ein mit dem Natrium in Kontakt stehender metallischer Deckel. Bei der Entladung, also dann, wenn die Stromanschlüsse über eine Last miteinander verbunden sind, wandern Natriumionen durch den Festelektrolyten zum Schwefel. Dabei reagieren die Natriumionen mit Schwefel unter Aufnahme von Elektronen zu Natriumpolysulfid. Der dem Natriumionenstrom entsprechende Elektronenstrom fließt über die äußere Last.

Der Wiederaufladung der Zelle wird eine äußere Stromquelle angeschlossen, deren Spannung größer ist als die Ruhespannung der Zelle. Nach dem Anlegen der Ladespannung fließt ein Ladestrom. Das Reaktionsprodukt Natriumpolysulfid wird zersetzt, die Natriumionen wandern durch den Festelektrolyten zurück in den Innenraum und Schwefel bleibt im Außenraum zurück.

Entsprechende Na/S-Batterien werden in Modulen zusammengefaßt, aus denen eine komplette Batteriebestückung zusammengestellt wird. Durch Reihen- und Parallelschaltung der Zellen läßt sich die gewünschte Klemmenspannung erreichen. Entsprechende Batteriemodule können bei kompaktem Aufbau eine Kapazität von 180 Ah mit einer Leerlaufspannung von 200 V bis 170 V aufweisen.

Ausschlaggebend für die Güte der Feststoffelektrolyten ist u.a. das Ausgangspulver, welches zu den gewünschten Formkörpern ausgeformt und anschließend gesintert wird. Dabei muß sichergestellt sein, daß der Bestandteil an Natriumaluminat verschwindend gering ist, da andernfalls beim Sintern ein Umwandeln in die β-Phase erfolgen würde, die mit einer Ausweitung des Kristalls einhergeht. Auch muß sichergestellt sein, daß das Oxidkeramikpulver frei von Verunreinigungen ist.

Aus der US 4,013,477 ist ein Verfahren zur Herstellung von Keramikkörpern aus β-Aluminium bekannt. Hierzu werden Kristalisationskeime aus β-Aluminiumoxid in einem Vorkalzinierungsvorgang in einer Platinschale erzeugt. Anschließend wird das so gewonnene β-Aluminiumoxid unter ein Matrix-Pulver untergemischt, um das gesamte Gemisch erneut zu kalzinieren, um beim anschließenden Sintern einen hohen Anteil an Aluminiumoxid in der β-Phase zu erreichen. Durch das zwingend vorgeschriebene zweimalige Kalzinieren ist das Herstellungsverfahren recht aufwendig.

Um einen möglichst hohen Anteil an Aluminiumoxid der β''-Phase in einem gesinterten Elektrolyten zu erzielen, durchlaufen nach der US 4,167,550 die Ausgangsmaterialien ein vorgegebenes Temperaturprofil derart, daß zunächst kalziniertes Pulver bereichsweise in die β-Phase umgesetzt wird, um anschließend beim Sintern die noch weitere Umsetzung zu erreichen. Dabei erfolgt zunächst ein relativ komplizierter Sintervorgang bei zunächst ca. 1.400 °C, sodann eine Temperaturerniedrigung zur Erzielung einer Keimbildung und anschließend eine Temperaturerhöhung auf 1.610 °C. Der erzielte β-Phasen-Anteil ist jedoch relativ gering (deutlich unter 95 %). Auch liegt die Dichte nur bei 3,18 g/cm ³.

Der vorliegenden Erfindung liegt unter anderem die Aufgabe zugrunde, daß sich die zur Kalzination bereitgestellten Ausgangsmaterialien nicht entmischen können, daß während des Kalzinierens eine nahezu vollständige Konversion in die gewünschte Oxidkeramik, insbesondere β/β''-Aluminiumoxid erfolgt. Auch soll gewährleistet sein, daß während des Kalzinierens weder Verunreinigungen in die zu kalzinierenden Materialien eindringen noch aus diesen ausdampfende korrosive Substanzen wie Na₂O zu schädigenden Wirkungen auf die zum Kalzinieren benötigte Vorrichtung führen.

Verfahrensgemäß wird die Aufgabe zum einen dadurch gelöst, daß Ausgangsmaterialien für das Pulvergemisch homogenisiert, so gebildetes Gemisch zu Körpern verdichtet, sodann die Körper zur Gewinnung von Granulat aufgebrochen und anschließend in einem Drehrohrofen kalziniert werden.

Zum anderen wird die Aufgabe durch ein Verfahren zur Herstellung von β/β''-Aluminiumoxid-Pulvergemisch, insbesondere bestimmt zur Herstellung eines einseitig offenen hohlzylindrischen Körpers als Feststoffelektrolyten für z. B. eine Natrium-Schwefel-Batterie dadurch gelöst, daß zumindest Al₂O₃ und Na₂CO₃ als Ausgangsmaterialien mit einer mittleren Teilchengröße von in etwa 0,2 - 5,0 µm und eine Schüttdichte von in etwa 0,10 - 0,30 g/cm³ homogenisiert und sodann zu Körpern verdichtet werden, daß die verdichteten Körper zu Granulat einer Korngröße d mit d < 5 mm und einer Schüttdichte von in etwa 0,6 - 1,2 g/cm³ gebrochen werden und daß das Granulat anschließend in einem mit MgO ausgekleideten Drehrohrofen bei einer Temperatur T mit in etwa T < 1.400 °C kalziniert werden.

Erfindungsgemäß ist nur ein einziger Kalzinier-Verfahrensschnitt erforderlich, um Aluminiumoxid mit einem β''-Phasenanteil von mehr als 98 % und einer Dichte von über 3,2 g/cm ³ herzustellen.

Insbesondere können die Ausgangsmaterialien zu Kugeln einer Dichte von ρ mit 1,5 ≦ ρ ≦ 2,0 g/cm³ verdichtet werden.

Durch die diesbezüglichen Verfahrensschritte wird sichergestellt, daß die Ausgangsmaterialien vor dem Kalzinieren nicht entmischt werden. Durch die Granulatherstellung ist des weiteren sichergestellt, daß das während des Kalzinierens auftretende Na₂O, das bei Temperaturen oberhalb von 1200°C einen hohen Partialdruck aufweist, nicht oder nur unwesentlich abdampfen kann.

Zum Unterbinden dieses unerwünschten Abdampfens erfolgt zusätzlich das Kalzinieren in relativ kurzen Zeiträumen. So ist vorgesehen, daß das nach dem Aufbrechen der verdichteten Kugeln als rieselfähiges Gut zur Verfügung stehende Granulat innerhalb einer Zeitdauer t₁ mit 20 < t₁< 40 min, vorzugsweise mit t₁ in etwa 30 min auf eine Temperatur T₁ mit 1300°C ≦ T₁ ≦ 1400°C, vorzugsweise T₁ in etwa 1350°C aufgeheizt, während einer Zeitdauer t₂ mit 20 ≦ t₂ < 40 min, vorzugsweise t₂ in etwa 30 min auf der Temperatur T₁ gehalten und anschließend während einer Zeitdauer t₃ mit 10 < t₂ < 30 min vorzugsweise t₂ in etwa 20 min auf eine Temperatur T₂ mit T₂ ≦ 400°C abgekühlt wird.

Ferner ist vorgesehen, daß das Volumen innerhalb des Drehrohrofens zu dem diesen durchlaufenden Granulat so aufeinander abgestimmt sind, daß das Granulat in etwa 20-40 %, vorzugsweise in etwa 30 % des Volumens ausfüllt, das von der Magnesiumauskleidung umschlossen ist.

Zu erwähnen ist noch, daß grundsätzlich ein Kalzinieren ein allgemeiner Vorgang ist, bei dem bei der Wärmebehandlung H₂O- bzw. CO₂-Verluste auftreten, wenn z.B. Calziumhydroxid in Calziumoxid überführt wird. Bei der erfindungsgemäßen Lehre handelt es sich jedoch nicht nur um ein Kalzinieren, d.h. einen Gewichtsverlust, sondern um eine chemische Umsetzung von den Ausgangskomponenten wie Aluminiumoxid, Natriumkarbonat und Litriumoxid zu β/β''-Aluminiumoxid. Das heißt, neben dem Gewichtsverlust handelt es sich auch um eine Umseztung.

Die Vorteile der vorliegenden Erfindung liegen insbesondere in dieser Umsetzung, die nahezu vollständig zu Aluminiumoxid in der β- bzw. β''-Phase führt.

Nach einem eigenerfinderischen Vorschlag ist vorgesehen, daß das rieselfähige Granulat sukzessiv die durch Trennflächen unterteilten Auskleidungen des Drehrohrofens durchläuft, wobei die Trennflächen derart zueinander ausgerichtet und flächenmäßig ausgebildet sind, daß sich über die Länge des Drehrohrofens ein freier Durchtritt nicht ergibt. Vielmehr müssen die den Drehrohrofen durchlaufenden Materialien labyrinthartig zwischen den einzelnen durch die Trennflächen unterteilten Abschnitte der Magnesiumauskleidung laufen.

Eine Vorrichtung zum Kalzinieren von Oxidkeramik bildenden Ausgangsmaterialien, insbesondere von zu β/β''-Aluminiumoxid zu konvertierende Ausgangsmaterialien umfassend zumindest Al₂O₃ und Na₂CO₃ zeichnet sich dadurch aus, daß die Vorrichtung ein mit Magnesiumoxid ausgekleideter Drehrohrofen ist. Dabei sind in dem Rohr des Drehrohrofens MgO-Tiegel als MgO-Auskleidung aneinandergereiht angeordnet.

Die Tiegel selbst weisen bodenseitig Durchbrechungen zum Durchtritt des Granulats auf, wobei die Durchbrechungen aufeinanderfolgender Tiegel zumindest bereichsweise versetzt zueinander verlaufen.

Die Durchbrechungen selbst können als bis zur Tiegelumfangswandung erstreckende Ausschnitte ausgebildet sein, durch die Abschnitte einer Verzahnung gebildet werden, durch die die aneinandergereihten MgO-Tiegel eine untereinander gegen ein gegenseitiges Verdrehen gesicherte Einheit bilden. Hierzu müssen die Stirnränder der Öffnungen der einzelnen Tiegel entsprechende Ausklinkungen aufweisen und kongruent zum Bodenbereich des auf die Öffnung aufzusetzenden Tiegels ausgebildet sein.

Die Ausschnitte selbst bilden eine Fläche von weniger als 50 % der Bodenfläche, verlaufen zudem außerhalb der Längsachse des Tiegels.

Um eine Relativdrehung zwischen dem aus den Tiegeln gebildeten MgO-Rohr und dem Außenrohr des Drehrohrofens, das aus Al₂O₃ besteht, auszuschließen, werden die aneinandergereihten Tiegel in Längsrichtung federvorgespannt. Zusätzlich kann zumindest einer der Tiegel gegenüber dem Außenrohr drehgesichert sein.

Zu den Ausschnitten der aufeinanderfolgenden Tiegeln ist noch zu bemerken, daß diese um einen Winkel α mit 15° < α < 90° gegeneinander versetzt verlaufen sollten.

Weitere Einzelheiten, Vorteile und Merkmale ergeben sich nicht nur aus den Ansprüche, den diesen zu entnehmenden Merkmalen -für sich und/oder in Kombination-, sondern auch aus der nachfolgenden Beschreibung eines der Zeichnung zu entnehmenden bevorzugten Ausführungsform sowie eines Beispiels zur Herstellung von β/β''-Aluminiumoxid.

Es zeigen:
- Figur 1: in schematischer Darstellung in einem Ausschnitt einen Drehrohrofen zum Kalzinieren von Oxidkeramik bildenden Ausgangsmaterialien,
- Figur 2: eine Vorderansicht eines in dem Drehrohrofen nach Fig. 1 angeordneten Tiegelformteils,
- Figur 3: das Tiegelformteil nach Fig. 2 in Seitenansicht und
- Figur 4: das Tiegelformteil nach den Fig. 2 und 3 in Draufsicht.

Um ein Pulvergemisch aus β/β''-Aluminiumoxid herzustellen, das zu einem einseitig geschlossenen hohlzylindrischen Körper als Feststoffelektrolyten für eine Natrium-Schwefel-Batterie verdichtet werden soll, wurden 1200 g Al₂O₃ mit der Kennzeichnung HPA-0,5 Al der Firma CONDEA und einer mittleren Korngröße von 0,48 µm, 205 g dehydriertes handelsübliches Na₂CO₃ und 28,9 g handelsübliches LiOH als Monohydrat homogenisiert.

Das Pulvergemisch wurde in eine Gummiform mit ellipsoidförmiger Höhlung eingefüllt und die Form in einem Stahlgesenk mit Ober- und Unterstempel bei einem Druck von 2000 bar zusammengepreßt. Durch anschließendes Brechen der Kugeln wurde das Granulat mit einer mittleren Korngröße von ca. 2 mm Durchmesser erzeugt. Die Granulatkorndichte betrug 2 g/cm³ und setzte sich im Mittel aus mehr als 10 · 10⁶ Primärteilchen zusammen. Das Granulat wurde bei Raumtemperatur einem mit Magnesiumoxid ausgekleideten Drehrohrofen (10) zugeführt.

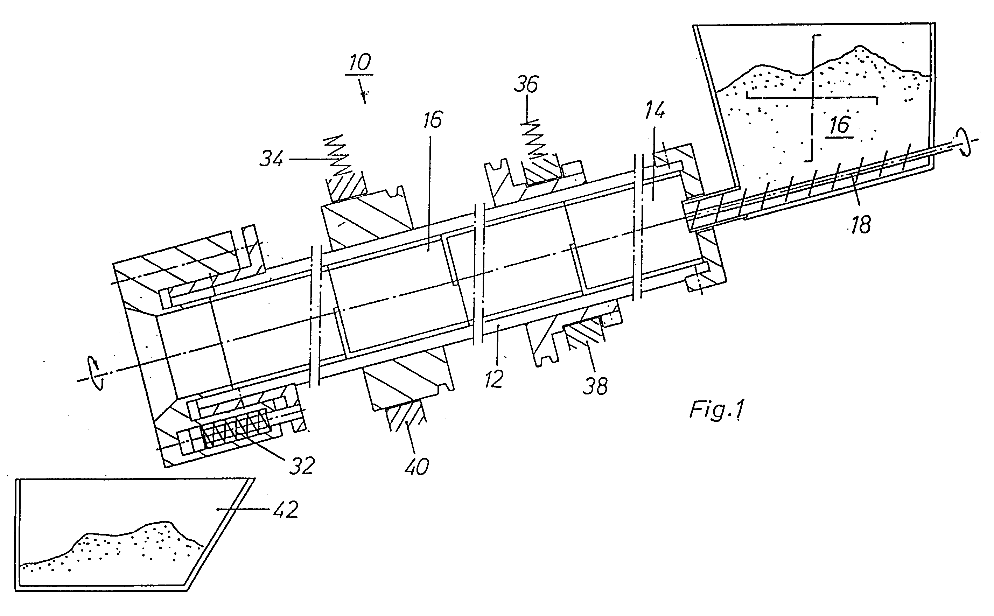

Der rein prinzipiell in Fig. 1 dargestellte Ausschnitt eines Drehrohrofens (10) besteht aus einem äußeren aus Aluminiumoxid bestehenden Rohr (12) und einer aus MgO bestehenden Innenverkleidung (14), dem über einen Vorratsbehälter (16) und einer Förderschnecke (18) das rieselförmige Granulat zugeführt wird, das in zuvor beschriebener Weise hergestellt worden ist.

Die MgO-Auskleidung (14) setzt sich aus aneinandergereihten MgO-Tiegelformteilen zusammen, die rein beispielhaft mit dem Bezugszeichen (16) versehen sind.

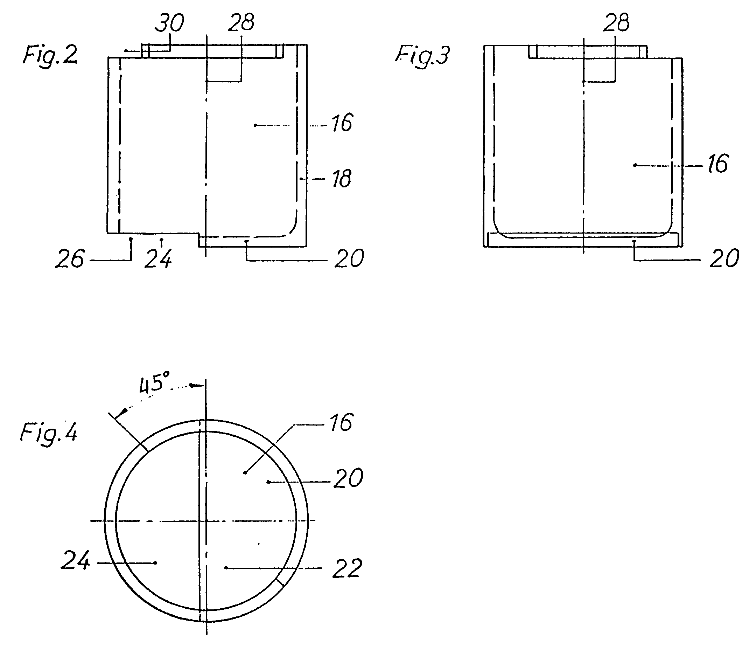

Details der entsprechenden Tiegelformteile (16) ergeben sich aus den Fig. 2 bis 4.

So ist jeder Tiegel (16) als hohlzylindrischer Körper mit Umfangswandung (18), einer Teilbodenfläche (20) sowie einer Öffnung (22) ausgebildet.

Die Bodenfläche (20) weist einen Ausschnitt (24) auf, der sich bis zur Seitenwandung (18) erstreckt. Folglich ergibt sich im Bodenbereich (20) eine Ausklinkung, die in Fig. 2 mit dem Bezugszeichen (26) bezeichnet ist.

Der Ausschnitt (24) beträgt weniger als 50% des Querschnitts des Tiegels (16), so daß sich der geschlossene Bodenbereich (20) bis über die Mittelachse (28) des Tiegels (16) erstreckt.

Um die in dem Außenrohr (12) angeordneten MgO-Tiegel (16) aneinanderzureihen und als Einheit derart auszubilden, daß diese gegeneinander nicht verdrehbar sind, greifen die aneinanderstoßenden Tiegel (16) in Art einer Verzahnung ineinander. Dabei wird der Ausklinkung (26) des einen Tiegels eine entsprechende Ausklinkung im Stirnbereich des nachfolgenden Tiegels kongruent angepaßt. Eine entsprechende Ausklinkung des Tiegels (16) der Fig. 2 bis 4 weist das Bezugszeichen (30) auf.

Ferner sind die Ausklinkungen (30) der Tiegel (16) derart aufeinander ausgerichtet, daß die Bodenflächen (20) der aufeinanderfolgenden Tiegel (16) versetzt zueinander verlaufen, und zwar um einen Winkel, der im Bereich zwischen 15 und 90° liegt, vorzugsweise jedoch bei 45°.

Sind die Tiegel (16) untereinander durch die Verzahnung gegen ein Verdrehen gesichert, so werden die Tiegel (16), die die Auskleidung (14) in Form eines Innenrohres bilden, gegen ein Verdrehen gegenüber dem Außenrohr dadurch gesichert, daß eine axiale Federvorspannung erfolgt. Dies ist beispielhaft in Fig. 1 eingezeichnet (Bezugszeichen 32). Das Außenrohr (12) ist des weiteren gleichfalls vorzugsweise über Federelemente (34) und (36) gegen ein Festlager (38) bzw. ein Loslager(40) vorgespannt, um auf diese Weise sicherzustellen, daß das Außenrohr (12) im erforderliche Umfang unabhängig von den auftretenden temperaturbedingten Ausdehnungen gedreht werden kann.

Am Ausgang der des Rohrofens (10) befindet sich ein Auffangbehälter (42), in dem das kalzinierte Granulat aufgefangen wird, um dieses anschließend zu einem Pulvergemisch gewünschter Körnung zu mahlen.

Das über die Förderschnecke (18) dem Drehrohrofen (10) zugeführte Granulat wird durch Drehen des Außenrohres (12) und damit durch das Mitbewegen des Innenrohrs (14) von Tiegel (16) zu Tiegel (16) gefördert. Die Aufheizung des Granulats erfolgt innerhalb von 30 min. auf ca. 1350°C. Nach einer Verweilzeit von ca. 30 min. bei dieser Temperatur wird das Granulat in etwa 20 min. auf ca. 400°C abgekühlt.

Anschließende röntgenographische Untersuchungen haben ergeben, daß die Umsetzung zur β- und β''-Aluminiumoxid-Phase etwa 99 % betrug, so daß sich nach dem Ausformen zu den gewünschten Formkörpern und anschließendem Sintern die angestrebte β''-Aluminiumoxid-Phase mit Na_{1,67}AL_{10,67}Li_{0,33}O₁₇ ausgebildet hat.

Ist im Ausführungsbeispiel nur auf die Herstellung von einem Pulvergemisch zur Ausbildung von β/β''-Aluminiumoxid eingegangen worden, so ist die erfindungsgemäße Lehre auch zur Herstellung anderer Materialien zur Gewinnung eines Pulvergemisches aus Oxidkeramik wie Magnesiumoxid, α-Aluminiumoxid oder Zirkonoxid möglich.

## Patentansprüche

1. Verfahren zur Herstellung eines Pulvergemisches aus Oxidkeramik, welches zur Herstellung von insbesondere topfförmigen Körpern zu verwenden ist,
**dadurch gekennzeichnet,**
daß Ausgangsmaterialien für das Pulvergemisch homogenisiert, so gebildetes Gemisch zu Körpern verdichtet, sodann die Körper zur Gewinnung von Granulat aufgebrochen und anschließend in einem Drehrohrofen (10) kalziniert werden.

2. Verfahren nach Anspruch 1,
**dadurch gekennzeichnet,**
daß das Gemisch der homogenisierten Ausgangsmaterialien zu Kugeln oder Zylindern verdichtet wird.

3. Verfahren zur Herstellung von β- und β''-Aluminiumoxid-Pulvergemisch, insbesondere bestimmt zur Herstellung eines einseitig offenen hohlzylindrischen Körpers als Feststoffelektrolyten für z. B. eine Natrium-Schwefel-Batterie,
**dadurch gekennzeichnet,**
daß zumindest Al₂O₃ und Na₂CO₃ als Ausgangsmaterialien mit einer mittleren Teilchengröße von in etwa 0,2 - 5,0 µm und einer Schüttdichte von in etwa 0,10 - 0,30 g/cm³ homogenisiert und sodann zu Körpern verdichtet werden, daß die verdichteten Körper zu Granulat einer Korngröße d mit d< 5 mm und einer Schüttdichte von in etwa 0,6 - 1,2 g/cm³ gebrochen werden und daß das Granulat anschließend in einem mit MgO ausgekleideten Drehrohrofen bei einer Temperatur T mit T < 1.400 °C kalziniert werden.

4. Verfahren nach Anspruch 3,
**dadurch gekennzeichnet,**
daß die mittlere Teilchengröße der Ausgangsmaterialien in etwa 1 µm beträgt und/oder eine Schüttdichte von in etwa 0,20 g/cm³ aufweisen.

5. Verfahren nach Anspruch 3,
**dadurch gekennzeichnet,**
daß das Granulat eine Schüttdichte von in etwa 1,0 g/cm³ aufweist.

6. Verfahren nach Anspruch 3,
**dadurch gekennzeichnet,**
daß die aufgemahlenen Ausgangsmaterialien zu Kugeln verdichtet werden, wobei vorzugsweise die Ausgangsmaterialien durch Aufmahlen homogenisiert und zu einer Dichte von 1,5 ≦ ρ ≦ 2,0 g/cm³ verdichtet werden.

7. Verfahren nach zumindest einem der vorhergehenden Ansprüche,
**dadurch gekennzeichnet,**
daß die Ausgangsmaterialien als rieselfähriges Granulat kalziniert werden.

8. Verfahren nach zumindest einem der vorhergehenden Ansprüche,
**dadurch gekennzeichnet,**
daß das Granulat innerhalb einer Zeitdauer t₁ mit 20 < t₁ < 40 min, vorzugsweise mit t₁ in etwa 30 min auf eine Temperatur T₁ mit 1300 ≦ T₁ ≦ 1400°C, vorzugsweise T₁ in etwa 1350°C aufgeheizt, während einer Zeitdauer t₂ mit 20 < t₂ < 40 min, vorzugsweise t₂ in etwa 30 min auf der Temperatur T₁ gehalten und anschließend während einer Zeitdauer t₃ mit 10 < t₃ < 30 min, vorzugsweise t₃ in etwa 20 min auf eine Temperatur T₂ mit T₂ ≦ 400°C abgekühlt wird.

9. Verfahren nach zumindest einem der vorhergehenden Ansprüche,
**dadurch gekennzeichnet,**
daß das Granulat labyrinthartig den durch Trennflächen unterteilten Drehrohrofen (10) durchläuft, wobei vorzugsweise das Granulat in einer Menge durch den Drehrohrofen (10) geführt wird, daß das Volumen des Granulats sich zum Volumen des von der MgO-Auskleidung umgebenden Raums verhält wie 1 : 3 bis 1 : 4, vorzugsweise 1 : 3,3.

10. Vorrichtung zum Kalzinieren von Oxidkermaik bildenden Ausgangsmaterialien, insbesondere von zu β- und β''-Aluminiumoxid zu konvertierenden Ausgangsmaterialien umfassend zumindes Al₂O₃ und Na₂CO₃,
**dadurch gekennzeichnet,**
daß die Vorrichtung ein mit MgO ausgekleideter Drehrohrofen (10) ist.

11. Vorrichtung nach Anspruch 10,
**dadurch gekennzeichnet,**
daß in dem Rohr (12) des Drehrohrofens (10) MgO-Tiegel (16) als MgO-Auskleidung (14) aneinandergereiht angeordnet sind, wobei vorzugsweise die MgO-Tiegel (16) bodenseitig Durchbrechungen (24) zum Durchtritt der Ausgangsmaterialien aufweisen, wobei die Durchbrechnungen aufeinanderfolgender Tiegel zumindest bereichsweise versetzt zueinander verlaufen.

12. Vorrichtung nach zumindest einem der vorhergehenden Ansprüche,
**dadurch gekennzeichnet,**
daß die Durchbrechungen (24) sich bis zur Tiegelumfangswandung (18) erstreckende Ausschnitte (24) sind, wobei vorzugsweise die Ausschnitte (24) eine Fläche von weniger als 50 % der Bodenfläche des Tiegels (16) bilden und außerhalb der Längsachse (28) verlaufen.

13. Vorrichtung nach zumindest einem der vorhergehenden Ansprüche,
**dadurch gekennzeichnet,**
daß die aufeinanderfolgenden Tiegel (16) verzahnt ineinandergreifen und vorzugsweise in Längsrichtung des Drehrohrofens (10) federvorgespannt sind.

14. Vorrichtung nach zumindest einem der vorhergehenden Ansprüche,
**dadurch gekennzeichnet,**
daß zumindest ein Tiegel (16) gegenüber dem vorzugsweise aus Al₂O₃ bestehenden Rohr (12) verdrehgesichert ist.

15. Vorrichtung nach zumindest einem der vorhergehenden Ansprüche,
**dadurch gekennzeichnet,**
daß die vorzugsweise eines jeden Tiegels gleichgroßen Ausschnitte (24) von aufeinanderfolgenden Tiegeln (16) um einen Winkel α mit 15° < α < 90° gegeneinander versetzt verlaufen.

16. Vorrichtung nach zumindest Anspruch 14,
**dadurch gekennzeichnet,**
daß der Drehrohrofen (10) bezogen auf das Hohlraumvolumen der Auskleidung (14) in etwa 25 bis 30 %, vorzugsweise in etwa 30 % mit den Ausgangsmaterialien gefüllt ist.
